# EUROPÄISCHE PATENTSCHRIFT

(11) **EP 0 343 321 B1**
(45) Veröffentlichungstag und Bekanntmachung des Hinweises auf die Patenterteilung: **24.11.1993**
(21) Anmeldenummer: 89102619.7
(22) Anmeldetag: 16.02.1989
(51) Int. Cl.: B62J 7/04

(54) **Längsverstellbarer Gepäckträger**
Longitudinally adjustable luggage carrier
Portes-bagages à réglage longitudinal

(30) Priorität: 21.05.1988 DE 3817396
(43) Veröffentlichungstag der Anmeldung: 29.11.1989
(73) Patentinhaber: ESGE-Marby GmbH + Co. KG., D-33729 Bielefeld (DE)
(72) Erfinder: Belka, Heinrich, D-4800 Bielefeld 11 (DE)
(74) Vertreter: Rüger, Rudolf, Dr.-Ing.

(56) Entgegenhaltungen:
- CH-A- 316 315
- GB-A- 2 066 751
- US-A- 4 350 361
- US-A- 4 429 818

## Beschreibung

Die Erfindung geht aus von einem Gepäckträger mit den Merkmalen des Oberbegriffes des Anspruches 1 bzw. des Oberbegriffes des Anspruches 2.

Aus der US-A-4 350 361 ist ein gattungsgemäßer Fahrradgepäckträger bekannt, dessen etwa rechteckiger Rahmen an seinen Längsseiten,die parallel zur Längsachse des Zweiradfahrzeuges verlaufen, drahtförmige Streben aufweist. Diese drahtförmigen Streben sind durch mehrere plattenförmige Querstreben miteinander verbunden, die Durchgangsöffnungen aufweisen, durch die die seitlichen Streben des Gepäckträgerrahmens hindurch laufen. Außerdem ist jede der plattenförmigen Querstreben mit nach unten weisenden Laschen oder Fortsätzen versehen, an denen die Stützschenkel angeschraubt sind, die den Gepäckträgerrahmen zum Ausfallende der Hintergabel abstützen.

Damit der bekannte Gepäckträger auf Fahrrädern mit unterschiedlicher Länge der Hintergabelrohre verwendet werden kann, ohne daß zur Befestigung des Rahmens am Sattelrohr der Gepäckträgerrahmen unterschiedlich stark geneigt werden muß, sind die Querstreben auf den drahtförmigen Längsstreben verschiebbar.

Die axiale Sicherung der Querstreben auf den Längsstreben soll nach der Montage durch Kleben, Verquetschen oder Sicherungsschrauben erfolgen, wobei jedoch keine Angaben gemacht sind, wie die Schrauben anzubringen sind. Bei den ersten beiden Sicherungstechniken, nämlich dem Verkleben und dem Verquetschen, handelt es sich um Maßnahmen, die wegen der besonderen Sorgfalt bzw. der speziellen Werkzeuge nur werksseitig durchgeführt werden können. Die Möglichkeit, den bekannten Gepäckträger an unterschiedliche Rahmen anzupassen, ist deswegen nur werksseitig gegeben.

Die US-A-4 429 818 zeigt einen Gepäckträger für Fahrräder u.dgl., wobei der Gepäckträgerrahmen von einer zu einem U gebogenen Strebe gebildet ist und sich das Profil in Richtung auf den Sattel öffnet. Die Basis des Profils bildet die hintere Querstrebe, an der ein hinteres Stützschenkelpaar befestigt ist. Zwischen den dem Sattel benachbarten freien Enden des Rahmens sind zwei Querstreben angeordnet, die im Abstand von ihren Enden ovale Langlöcher enthalten, wobei die insgesamt vier Langlöcher in den beiden Streben paarweise miteinander fluchten. In jeweils zwei hintereinander liegende Langlöcher ist eine Befestigungslasche eingesteckt, deren von dem Gepäckträgerrahmen abliegendes Ende zur Befestigung an dem Sitzrohr des Fahrradrahmens ausgestaltet ist. Durch Verschieben dieser Laschen erfolgt eine Anpassung des Gepäckträgers an unterschiedliche Abstände der Vertikalebene, in der die Hinterachse des Fahrrades liegt und der Vertikalebene, die die Befestigungsstelle des Gepäckträgers am Sitzrohr enthält.

Die in den Längsstreben des Gepäckträgers enthaltenen Bohrungen dienen hingegen nicht zur Längsverstellung, sondern der Befestigung von Querstreben und der Veränderung des Anbringpunktes des vorderen Stützschenkelpaares, um auf diese Weise den Abstand zur Hinterachse, also damit die Höhe des Gepäckträgers, zu verändern.

Die GB-A-2 066 751 beschreibt einen Gepäckträger für Motorräder u.dgl., die in der Regel eine gefederte Hintergabel haben. Deswegen fehlen diesem bekannten Gepäckträger auch die zu der Hinterachse führenden Stützschenkel. Statt dessen ist die Gepäckträgerauflagefläche mit Streben an zwei parallel, mit Abstand zueinander verlaufenden C-förmigen Schienen befestigt, die an einem Ende flachgequetscht sind und Befestigungsbohrungen in den flachgequetschten Enden enthalten. Diese Enden sind zur Anbringung an den Befestigungsschrauben für die Teleskopfedern der Hintergabel vorgesehen. Die Abstützung dieser C-förmigen, horizontal verlaufenden Streben geschieht mit weiteren Streben, die an anderen unbeweglichen Teilen des Motorradrahmens zu befestigen sind. Eine Längsverstellung von Stützschenkeln an dem Gepäckträgerrahmen zwecks Anpassung an die Rahmengeometrie des Zweiradfahrzeuges ist auch bei diesem bekannten Gepäckträger nicht vorgesehen.

Ausgehend hiervon ist es Aufgabe der Erfindung, einen Gepäckträger für Zweiradfahrzeuge zu schaffen, der leicht und ohne Spezialwerkzeug vielfältig an unterschiedliche Rahmengeometrien angepaßt werden kann, ohne daß hierzu die durch den Gepäckträgerrahmen definierte Fläche gegenüber der Horizontalen unterschiedlich geneigt werden muß.

Diese Aufgabe wird erfindungsgemäß durch den Fahrradgepäckträger mit den Merkmalen des Anspruches 1 bzw. den Fahrradgepäckträger mit den Merkmalen des Anspruches 2 gelöst.

Eine konstruktiv sehr einfache Lösung verwendet als Nutenstein den Kopf einer Schloßschraube, die mit ihrem Gewindeschaft aus der Nut hervorsteht. Auf das hervorstehende Ende der Schloßschraube ist der betreffende Stützschenkel, der eine dazu vorgesehene Bohrung trägt, aufgeschoben und mittels einer Mutter gesichert. Durch Anziehen der Mutter wird der Stützschenkel gegen die Berandung der Nut angepreßt, wobei gleichzeitig der Kopf der Schloßschraube, die durch ihren Vierkantansatz gegen Mitdrehen beim Anziehen gesichert ist, gegen die Hinterschneidungen in der Nut gepreßt wird.

Wenn das obere Ende jedes Stützschenkels L-förmig abgebogen wird, kann eine nach unten offene Nut verwendet werden, was einerseits den Vorteil hat, daß die Nut nicht als Schmutzfänger wirkt und andererseits die gesamte Befestigung der Stützschenkel unsichtbar von der Unterseite des Gepäckträgerrahmens erfolgt, wodurch ein gefälligerer Eindruck entsteht. Außerdem stehen weniger Kanten und Ecken hervor, an denen sich Gepäckstücke oder Kleidung verfahren können. Die Verspannung des L-förmig abgewinkelten Endes geschieht mit einer Klemmschraube, die durch den Nutenstein hindurchführt. Um ein Aufweiten der Nut beim Anziehen der Klemmschraube zu vermeiden, sind beidseits des Nutenschlitzes in der Nut Klemmflächen vorgesehen, die in Richtung auf die Mitte der Nut zu dem Nutengrund hin geneigt sind. Da der Nutenstein komplementär geformt ist, entsteht beim Anziehen der Klemmschraube an den miteinander zusammenwirkenden Schrägflächen eine Kraftkomponente, die bestrebt ist, die beiden Nutenflanken aufeinander zu zu ziehen.

Eine besonders robuste Verbindung entsteht dadurch, daß die Nut im Bereich ihres Nutengrundes an das Profil des abgewinkelten Stützschenkels angepaßt ist, weil hierdurch eine großflächige satte Anlage zustandekommt.

Eine andere Lösung mit verdeckter Nut besteht in der Verwendung einer Kopfschraube, deren Kopf den Nutenstein bildet und die in einer Bohrung sitzt, die in Längsrichtung des Stützschenkels verläuft. Mit Hilfe einer Mutter wird der Kopf der Schraube gegen die Hinterschneidungen in der T-förmigen Nut festgespannt. Diese Lösung setzt allerdings voraus, daß die Achse der Gewindebohrung in dem Stützschenkel rechtwinklig zu der Längserstreckung der Nut ausgerichtet ist.

Eine noch weitere Verstellbarkeit des Gepäckträgers wird erhalten, wenn die unteren Enden der Stützschenkel höhenverstellbar in einem an dem Zweiradfahrzeug befestigten Klemmteil sitzen.

Da bei dem neuen Gepäckträger unabhängig von der Rahmengeometrie des Zweirades die Stützschenkel immer unter demselben Winkel zueinander und zu der Vertikalen verlaufen, eignet sich die Anordnung besonders gut zur Befestigung von seitlichen Gepäcktaschen, wozu an den Stützschenkeln jeder Seite eine quer verlaufende Strebe starr angebracht ist, die als Aufhängevorrichtung für die Gepäcktaschen dient. Diese Strebe kann über die Stützschenkel hinaus verlängert sein, um im verlängerten Bereich in Richtung auf das untere Ende der Stützschenkel zu abgewinkelt zu sein.

In der Zeichnung ist ein Ausführungsbeispiel des Gegenstandes der Erfindung dargestellt. Es zeigen:
- Fig. 1: den Hinterbau des Fahrrades mit einem daran befestigten Gepäckträger gemäß der Erfindung in einer perspektivischen Darstellung,
- Fig. 2: die Befestigung eines der Stützschenkel an dem Rahmen des Gepäckträgers nach Fig. 1 in einer vergrößerten perspektivischen Explosionsdarstellung,
- Fig. 3: eine andere Ausführungsform der Befestigung des oberen Endes des Stützschenkels an dem Rahmen des Gepäckträgers in einem Schnitt quer zu der Fahrradlängsachse,
- Fig. 4: die Befestigungsanordnung nach Fig. 3 in einem Schnitt längs der Linie IV-IV aus Fig. 3,
- Fig. 5: eine Muffenverbindung bei dem erfindungsgemäßen Fahrradgepäckträger in einem Schnitt quer zur Fahrzeuglängsachse und
- Fig. 6: die Verbindung der Stützstrebe mit dem Rahmen des erfindungsgemäßen Gepäckträgers mittels einer Kopfschraube, ebenfalls geschnitten in einer Ebene quer zu der Fahrzeuglängsachse.

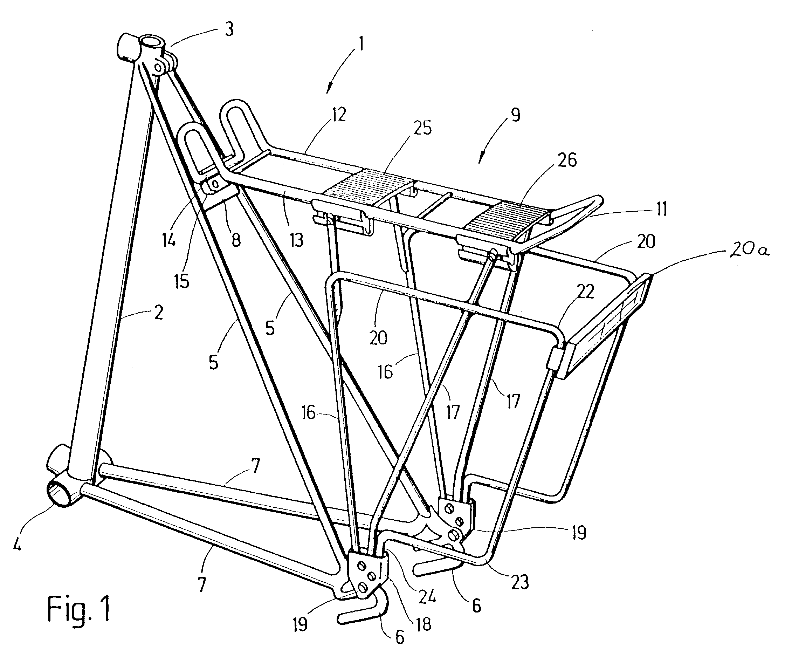

In Fig. 1 ist ein Hinterbau 1 eines Fahrrades mit seinem Sattelrohr 2 dargestellt, das einen Sattelkopf 3 sowie ein Tretlagergehäuse 4 aufweist. Von dem Sattelkopf 3 gehen zwei Hintergabelstreben 5 schräg nach unten. An ihren freien unteren Enden tragen sie beide Ausfallenden 6, die über zwei etwa horizontal verlaufende Hintergabelrohre 7 mit dem Tretlagergehäuse 4 verbunden sind.

Knapp unterhalb des Sattelkopfes 3 ist an beide Hintergabelstreben 5 eine Pletscher-Platte 8 angeschweißt.

An dem so gestalteten Fahrradhinterbau 1 ist ein Gepäckträger 9 befestigt, der einen eine Gepäckauflagefläche definierenden, etwa rechteckigen Rahmen 11 aufweist. Der etwa rechteckige Rahmen 11 besteht aus einem endlos zusammengeschweißten Runddraht und bildet zwei gerade Längsstreben 12 und 13, die die Längsseiten des Rahmens 11 darstellen sowie eine Querstrebe 14 an dem vorderen Ende des Rahmens 11, die an der Pletscher-Platte 8 mittels einer Befestigungsvorrichtung 15 angeschraubt ist. Die beiden Längsstreben 12 und 13 laufen mit Abstand parallel zueinander und parallel zu der Längserstreckung des Fahrrades, dessen Hinterbau 1 gezeigt ist.

Die weitere Abstützung des Rahmens 11 geschieht mittels zweier Paare von Stützschenkeln 16 und 17, die im Bereich der Längsstrebe 12 bzw. 13 mit Abstand voneinander befestigt sind und in Richtung auf das entsprechende Ausfallende 6 zu nach unten konvergieren. Ein Paar von Stützschenkeln 16, 17 befindet sich auf jeder Seite des Rahmens 11. Die beiden Stützschenkel 16 und 17 jedes Paares sind in der Nähe ihres unteren Endes parallel zueinander verlaufend abgebogen und stecken mit diesen in kleinem Abstand nebeneinander verlaufenden Enden in Aufnahmebohrungen eines Klemmstückes 18, das mittels einer Schraube 19 an dem betreffenden Ausfallende 6 angeschraubt ist.

Knapp unterhalb des Rahmens 11 sind die beiden Stützschenkel 16 und 17 jedes Paares durch eine Querstrebe 20 miteinander verbunden, die an die Stützschenkel 16 und 17 angeschweißt ist. Diese Querstrebe 20 erstreckt sich nach hinten über den hinteren Stützschenkel 17 jedes Paares hinaus und ist bei 22 nach unten zu abgebogen. Der abgebogene Bereich verläuft etwa parallel zu dem Stützschenkel 17 und ist knapp oberhalb des Klemmteiles 18 bei 23 in Richtung auf das Klemmteil 18 zu abgekröpft, derart, daß ein Ende 24 entsteht, das mit kleinem Abstand parallel zu den unteren Enden der beiden Stützschenkel 16 und 17 verläuft, damit der abgekröpfte Teil 24 in eine entsprechende Aufnahmebohrung des Klemmteiles 19 eingesteckt und dort zusammen mit den Stützschenkeln 16 und 17 verklemmt und gehaltert werden kann.

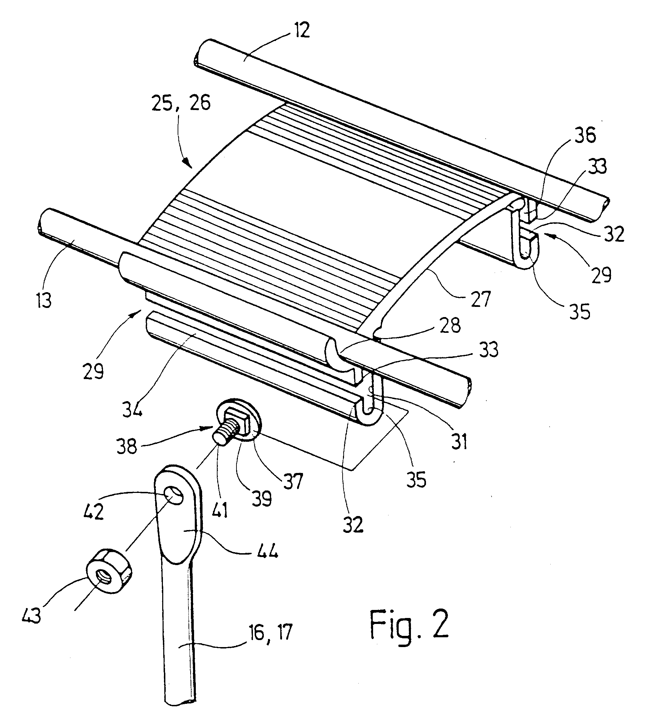

Um sicherzustellen, daß in, der normalen Gebrauchslage des Fahrrades, das auf einer horizontalen Fläche steht, auch die von dem Rahmen 11 definierte Gepäckauflagefläche und die Querstreben 20 horizontal verlaufen, und zwar unabhängig davon, wie innerhalb gewisser Grenzen die Bemessung des Hinterbaus 1 gestaltet ist, können die Stützschenkel 16 und 17 an beiden Längsstreben 12 und 13 in unterschiedlichen Stellungen längs der beiden Längsstreben 12, 13 fixiert werden. Auf diese Weise spielt es keine Rolle, welchen Abstand die Öffnung für die Befestigungsschraube 19 von einer vertikalen Geraden hat, die durch die Pletscher-Platte 8 hindurchläuft. Abstandsänderungen können durch entsprechend versetzte Befestigung der Stützschenkel 16 und 17 an den beiden Längsstreben 12 und 13 ausgeglichen werden, damit unabhängig von solchen Abstandsänderungen eine horizontale Lage des Rahmens 11 und damit der Gepäckauflagefläche eingestellt werden kann. Die Art der Befestigung der Stützschenkel des Ausführungsbeispiels nach Fig.1 ist in Fig. 2 vergrößert gezeigt. Wie bereits Fig. 1 erkennen läßt, befinden sich in denjenigen Abschnitten, innerhalb derer die Längsverstellbarkeit der beiden Stützschenkel 16 und 17 jeder Seite vorgesehen ist, zwei Strangpreßprofile 25 und 26, die untereinander gleich sind, weshalb im folgenden die Beschreibung für das Strangpreßprofil 25 gegeben ist. Für das Strangpreßprofil 26 und die Befestigung des Stützschenkels 17 gilt sinngemäß das gleiche.

Das Strangpreßprofil 25 zeigt einen etwa rechteckigen plattenförmigen mittleren Bereich 27, der an seinen kürzeren Seiten eingeformte zylindrische Nuten 28 enthält, die parallel zueinander verlaufen und einen Abstand aufweisen, der dem Abstand der beiden Längsstreben 12 und 13 entspricht. In diesen beiden Nuten 28 liegen die Längsstreben 12 und 13 mit möglichst geringem Spiel. Die Befestigung des Strangpreßteiles 25 geschieht durch Schweißstellen, und zwar dort, wo die beiden Längsstreben 12 und 13 aus der jeweiligen Nut 28 austreten.

Unterhalb einer jeden dieser beiden Nuten 28, von denen aus Darstellungsgründen in Fig. 2 lediglich die dem Betrachter zugewandte zu erkennen ist, befindet sich jeweils eine T-Nut 29, die parallel zu der benachbarten Längsstrebe 12 bzw. 13 verläuft. Diese beiden T-Nuten 29 sind untereinander gleich und spiegelbildlich, weshalb sie mit demselben Bezugszeichen versehen sind. Die Beschreibung gilt deswegen auch für beide T-Nuten 29.

Jede der T-Nuten 29 enthält einen Nutengrund 31 sowie zwei Nutenflanken 32 und 33, die an ihrem von dem Nutengrund 31 abliegenden Ende einen Nutenschlitz 34 begrenzen, der eine geringere lichte Weite hat als in den beiden Nutenflanken 32 und 33 ausgebildete hinterschnittene Bereich 35 und 36, die sich mit konstantem Profil über die gesamte Länge der Nut 29 bzw. des Strangpreßprofils 25 erstrecken. Die beiden Hinterschneidungen 35 und 36 haben eine Gestalt, die an den Flachrundkopf 37 einer Schloßschraube 38 angepaßt ist, während die Weite des Schlitzes 34 der Größe eines Vierkantansatzes 39 der Schloßschraube 38 entspricht. Auf diese Weise kann der Flachrundkopf 37 frei durch die Nut 29 von einem Ende bis zum anderen Ende hindurchgeführt werden, während der Vierkantansatz 39 in dem Schlitz 34 ein Drehen der Schloßschraube 38 um ihre Längsachse verhindert. Die mit ihrem Flachrundkopf 37 in die Nut 29 eingeführte Schloßschraube 38 schaut mit ihrem Gewindeschaft 41 durch den Schlitz 34 nach außen vor und führt durch eine Querbohrung 42,
die am oberen Ende der Stützstrebe 16 ausgebildet ist. Auf dem aus der Querbohrung 42 vorstehenden Ende des Gewindeschaftes 41 ist eine Mutter 43 aufgeschraubt, die beim Festziehen den betreffenden Stützschenkel 16 gegen die außenliegenden Randbereiche des Schlitzes 34 festspannt, während sich gleichzeitig der als Nutenstein wirkende Flachrundkopf 37 an den entsprechenden Flächen der beiden Hinterschneidungen 35 und 36 anlegt. Die beiden Hinterschneidungen 35 und 36 haben hierzu, wie dies bei T-Nuten üblich ist, parallel zu dem Schlitz 34 verlaufende und in einer gemeinsamen Ebene liegende Flächen, um zu verhindern, daß beim Anziehen der Mutter 43 Spreizkräfte an der Nut 29 wirksam werden. Die Schlitze 34 der Nuten 29 weisen von der Fahrzeugmitte nach außen.

Die Befestigung des insoweit beschriebenen Gepäckträgers 9 geschieht in der Weise, daß zunächst die beiden Klemmteile 18 mit den noch nicht festgezogenen Befestigungsschrauben 19 an den beiden Ausfallenden 6 montiert werden. Der Gepäckträger 9, dessen Stützschenkel 16 und 17 vertikal verschiebbar in den zugehörigen Klemmteilen 18 stecken, läßt sich deswegen leicht um die Befestigungsschrauben 19 herumschwenken, bis seine vordere Querstrebe 14 in dem Befestigungsstück 15 der Pletscher-Platte 8 liegt. Durch Verschieben der beiden Paare von Stützschenkeln 16 und 17 an den beiden Längsstreben 12 und 13 in Längsrichtung des Fahrrades kann die horizontale Ausrichtung der Gepäckauflagefläche justiert werden. Sobald die gewünschte Einstellung erreicht ist, werden die Befestigungsschrauben 19 angezogen und auch die Muttern 43 festgezogen, womit eine stabile unverrückbare Verbindung zwischen den Stützschenkeln 16 und 17 sowie dem Rahmen 11 des Gepäckträgers 9 zustandekommt.

Je nach dem, ob das Klemmteil 18 auf den Stützschenkeln 17 und 18 vorjustiert ist oder nicht, kann im letzteren Fall zunächst eine Höhengrobjustage durch Lösen der Klemmung im Klemmteil 18 erfolgen, ehe die Winkellage der Gepäckauflagefläche eingestellt wird. Der Aufbau eines hierfür geeigneten Klemmteils 18 ist in der DE-PS 33 43 844 im einzelnen beschrieben.

Damit bei dem Ausführungsbeispiel nach den Fig. 1 und 2 eine möglichst großflächige Anlage der Stützschenkel 16 und 17 an den Randbereichen des Schlitzes 34 zustandekommt, ist das obere Ende der Stützschenkel 16 und 17, wie gezeigt, bei 44 flachgequetscht, wodurch flache ebene Auflageflächen sowohl für die Mutter 43 als auch die Randbereiche des Schlitzes 34 zustandekommen.

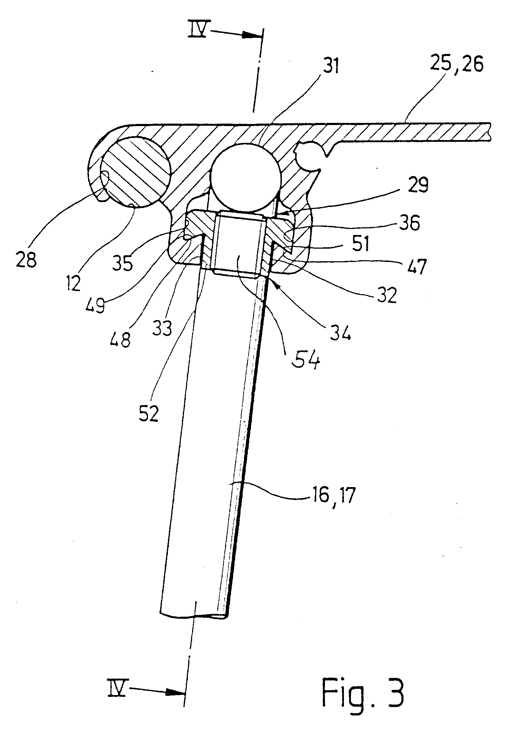

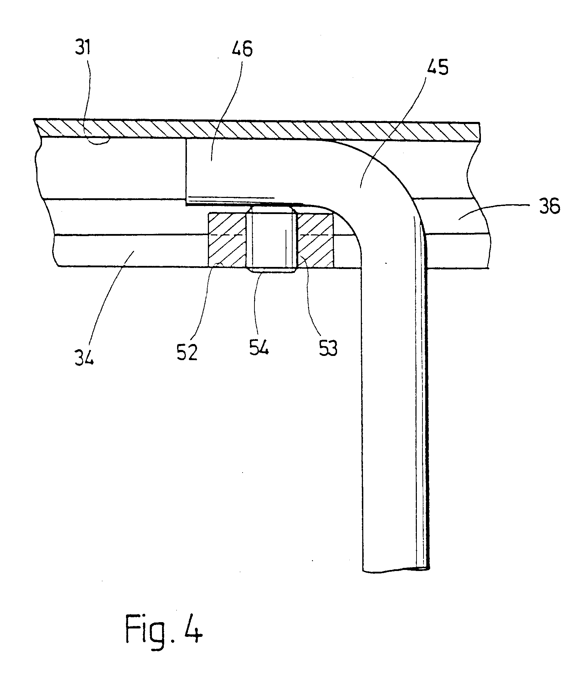

Wenn eine solche Verformung und Schwächung der Stützschenkel 16 und 17 unerwünscht ist, kann die in Längsrichtung der Längsstreben 12 und 13 verstellbare Befestigung der Stützschenkel 16 und 17 auch mittels einer Anordnung nach den Fig. 3 und 4 erhalten werden.

Um die Quersteifigkeit zu erhöhen, sind die beiden Streben 20 knapp unterhalb der Biegestelle 22 durch eine Querstrebe 20a miteinander verbunden.

In diesem Falle sind die Strangpreßprofile 25 und 26, die in Fig. 3 nur bis zur Hälfte gezeigt sind, mit nach unten zu offenen, teilzylindrischen Nuten 28 versehen, um, wie dargestellt, die Längsstrebe 12 bzw. in entsprechender Weise die Längsstrebe 13, aufzunehmen. Der Durchmesser der Nuten 28 ist wiederum nur geringfügig größer als der Durchmesser der Längsstreben 12 und 13, damit einerseits die Längsstreben 12 und 13 leicht eingeschoben werden können, andererseits aber eine satte Auflage zwischen den Streben 12 und 13 und der Nut 28 zustandekommt. Die axiale Sicherung der Strangpreßteile 25 und 26 auf den Längsstreben 12 und 13 geschieht wiederum durch Schweißpunkte an den Enden der Nut 28 oder an deren Nuträndern.

Weiter innen zur Fahrzeugmitte hin befindet sich neben der jeweiligen Nut 28 wiederum eine T-Nut 29, die parallel zu der jeweiligen Längsstrebe 12 bzw. 13 verläuft und für die dieselben Bezugszeichen wie im vorherigen Beispiel verwendet sind.

Der Schlitz 34 öffnet sich nun nach unten in Richtung des jeweiligen Stützschenkels 16 oder 17 und hat eine Weite, die dem Durchmesser des beispielsweise aus Runddraht hergestellten Stützschenkels 16 oder 17 entspricht. Der Nutengrund 31 ist teilzylindrisch oder halbzylindrisch ausgeformt, d.h. er ist in seinem Profil an das Profil des Stützschenkels 16 oder 17 angepaßt, der, wie Fig. 4 zeigt, an seinem oberen Ende 45 etwa L-förmig abgebogen ist, so daß ein Auflageschenkel 46 entsteht, der in Richtung der Nut 29, d.h. parallel zu der Längsstrebe 12 oder 13, verläuft. Entsprechend ist der Auflageschenkel 46 gegenüber dem Stützschenkel 16 oder 17 abgebogen. Dieser Winkel ist für jeden Stützschenkel 16 bzw. 17 unabhängig von seiner jeweiligen Einstellung immer der gleiche, da auch bei Abstandstoleranzen zwischen der Pletscher-Platte 8 und der Lage für die Klemmschraube 19 die Längsverstellbarkeit der Stützschenkel 16 und 17 für einen entsprechenden Ausgleich sorgt.

Die beiden Hinterschneidungen 35 und 36 in den beiden Nutenflanken 32 und 33 sind an ihrem von dem Nutengrund 31 abliegenden Ende, wie in Fig. 3 deutlich zu erkennen ist, mit ebenen Schrägflächen 47 und 48 versehen, die über die Länge der jeweiligen Nut 29 durchlaufen und deren dem Nutenschlitz 34 benachbarte Ränder näher zu dem Nutengrund 31 hin liegen als die von dem Nutenschlitz 34 abliegenden Kanten. Diese Schrägflächen wirken mit komplementären Schrägflächen 49 und 51 eines länglichen T-Nutensteins 52 zusammen, der in der T-Nut 29 sitzt und in einem seiner Länge entsprechenden Abschnitt den Schlitz 34 ausfüllt. Etwa in seiner Mitte weist der Nutenstein 52 eine Gewindebohrung 53 auf, die rechtwinklig zu der Nut 29 verläuft und in der eine Stiftschraube 54 als Klemmschraube eingedreht ist.

Im montierten Zustand liegt, wie die Fig. 3 und auch die Fig. 4 zeigen, der Auflageschenkel 46 des betreffenden Stützschenkels 16 oder 17 zwischen dem Nutengrund 31 und dem in die T-Nut 29 eingeschobenen Nutenstein 52. Durch Eindrehen der Klemmschraube 54 wird der Auflageschenkel 46 gegen den Nutengrund 31 verspannt, während gleichzeitig der Nutenstein 52 mit seinen schrägen Auflageflächen auf die Auflageflächen 47 und 48 der T-Nut gepreßt wird. Die gesamte Anordnung wird hierdurch in Längsrichtung der Nut reibschlüssig festgelegt, während Druckkräfte, die senkrecht zu der Gepäckauflagefläche wirksam sind, formschlüssig über den Auflageschenkel 46 und den Nutengrund 31 übertragen werden.

Da die Auflageflächen 47, 48, 49 und 51, wie gezeigt, schräg geneigt sind, werden beim Anziehen der Klemmschraube 54 die Ränder des Schlitzes 34 aufeinander zu gezogen und es besteht nicht die Gefahr, daß der Nutenstein 52 aus der T-Nut 29 herausgesprengt wird.

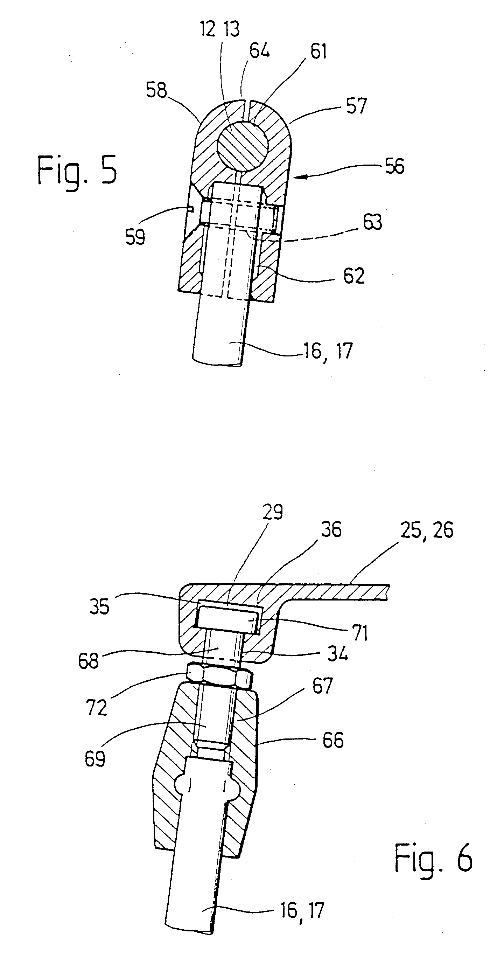

Bei einfachen und leichten Lösungen für den Gepäckträger 9, bei dem die Längsstreben 12 und 13 gegebenenfalls durch über Kunststoffmuffen angespritzte Querstreben untereinander verbunden sind, geschieht die Befestigung der Stützschenkel 16 und 17 an den Längsstreben 12 oder 13 mit Hilfe einer längsgeteilten Muffe 56, wie sie in Fig. 5 gezeigt ist. Die Muffe 56 besteht aus zwei Halbschalen 57 und 58, die mittels einer durchgehenden Klemmschraube 59 zusammengespannt werden. In der Muffe 56 ist eine durchgehende Bohrung oder Öffnung 61 für die Längsstrebe 12 bzw. 13 sowie eine unter einem Winkel zu der Bohrung 61 verlaufende Sackbohrung 62 enthalten, die in ihrem Querschnitt an den Querschnitt des oberen Endes des betreffenden Stützschenkels 16 oder 17 angepaßt ist. Der Winkel, den die Sackbohrung 62 mit der Durchgangsbohrung 61 einschließt, entspricht dem Winkel, unter dem der betreffende Stützschenkel 16 oder 17 zu der Längsstrebe 12 oder 13 verläuft. Die Bohrung für die Klemmschraube 59 führt vorzugsweise rechtwinklig durch die Achse der Sackbohrung 62 hindurch, weshalb der Stützschenkel 16 oder 17 an seinem oberen Ende eine entsprechende fluchtende Querbohrung 63 enthält.

Um eine möglichst gute Klemmung und einfache Montage zu erhalten, sind die beiden Teilschalen 57 und 58 so gestaltet, daß die Trennfläche 64, an der sie zusammenstoßen, die Achsen der Durchgangsbohrung 61 und der Sackbohrung 62 enthält. Dementsprechend ist in jeder Teilschale 57 und 58 für diese Bohrungen 61 und 62 ein Halbzylinder ausgebildet, wenn die Schenkel und Streben runden Querschnitt haben.

Schließlich kann, wie Fig. 6 zeigt, auf das obere Ende des jeweiligen Stützschenkels 16 oder 17 eine Gewindehülse 66 aufgespritzt sein, die in Verlängerung des Stützschenkels 16 oder 17 eine Gewindebohrung 67 enthält. In der Gewindebohrung ist eine Kopfschraube 68 mit ihrem Gewindeschaft 69 fest eingeschraubt und beispielsweise mit einem Schraubensicherungsmittel gesichert. Die Kopfschraube 68 trägt einen zylindrischen Flachkopf 71, der ähnlich wie der Flachrundkopf 37 der Schloßschraube 38 bei dem Ausführungsbeispiel nach Fig. 2, als Nutenstein wirkt und in der nunmehr scharfkantig und rechtwinklig ausgebildeten T-Nut 29 sitzt. Der Schaft 69 der Kopfschraube 68 führt durch den nach unten in Richtung auf das Ausfallende 6 sich öffnenden Schlitz 34 der T-Nut 29 hindurch. Die Fixierung des Kopfes 71 in der T-Nut 29 geschieht mittels einer Mutter 72, die zwischen dem oberen Ende der Gewindehülse 66 und den Rändern des Schlitzes 34 sitzt. Durch Anziehen der Mutter 72 gegen die Ränder des Schlitzes 34 wird der zylindrische Kopf 71 gegen die Hinterschneidungen 35 und 36 in der T-Nut 29 festgezogen.

## Patentansprüche

1. Gepäckträger (9) für Zweiradfahrzeuge, mit einem eine Gepäckauflagefläche bildenden Rahmen (11), dessen Längsseiten (12, 13) etwa parallel zu einer Längsachse des Fahrzeugs verlaufen und von dem ausgehend an jeder Seite ein Satz von wenigstens zwei Stützschenkeln (16, 17) V-förmig konvergierend nach unten verlaufen, deren untere freie Enden an dem Zweiradfahrzeug in der Nähe der Ausfallenden (6) einer Gabel des Zweiradfahrzeuges zu befestigen sind, und mit Fixiergliedern (37,52, 71), durch das das obere Ende eines jeden Stützschenkels an der jeweiligen Längsseite (12, 13) des Rahmens (11) des Gepäckträgers (9) an einer beliebigen Stelle innerhalb eines Abschnittes fixierbar ist, der sich wenigstens ein Stück weit parallel zu bzw. entlang der jeweiligen Längsseite (12, 13) erstreckt, dadurch gekennzeichnet, daß sein Rahmen (11) wenigstens in den Abschnitten, in denen die Stützschenkel (16, 17) verstellbar sind, in Längsrichtung der Längsseite (12, 13) verlaufende Nuten (29) mit hinterschnittenen Nutenflanken (32, 33) aufweist, und daß das Fixierglied von einem Nutenstein (37, 52, 71) gebildet ist, der mit den hinterschnittenen Nutenflanken (32, 33) zusammenwirkt.

2. Gepäckträger (9) für Zweiradfahrzeuge, mit einem eine Gepäckauflagefläche bildenden Rahmen (11), dessen von Streben gebildete Längsseiten (12, 13) etwa parallel zu einer Längsachse des Fahrzeuges verlaufen und von dem ausgehend an jeder Seite ein Satz von wenigstens zwei Stützschenkeln (16, 17) V-förmig konvergierend nach unten verlaufen, deren untere freie Enden an dem Zweiradfahrzeug in der Nähe der Ausfallenden (6) einer Gabel des Zweiradfahrzeuges zu befestigen sind, und mit muffenförmigen Fixiergliedern (56), die mit einer Durchgangsöffnung (61) auf der zugehörigen Strebe (12, 13) formschlüssig sitzen und durch die das obere Ende eines jeden Stützschenkels (16, 17) an der jeweiligen Längsseite (12, 13) des Rahmens (11) des Gepäckträgers (9) an einer beliebigen Stelle innerhalb eines Abschnittes fixierbar ist, der sich wenigstens ein Stück weit entlang der jeweiligen Längsseite erstreckt, dadurch gekennzeichnet, daß die Muffe eine an den Querschnitt des jeweiligen Stützschenkels (16, 17) angepaßte sackförmige Öffnung (62) enthält und daß die Muffe aus zwei Halbschalen (57, 58) besteht, deren Trennfläche (64) die Achse der Öffnungen (61, 62) enthält und die durch wenigstens eine Klemmschraube (59) zusammenzuspannen sind.

3. Gepäckträger nach Anspruch 1, dadurch gekennzeichnet, daß der Nutenstein von einem Kopf (37) einer Schloßschraube (38) gebildet ist, deren ein Gewinde tragender Schaft (41) aus der Nut (29) hervorsteht und der durch eine in dem Stützschenkel (16, 17) enthaltene Querbohrung (42) hindurchführt und daß auf das freie Ende des Gewindeschaftes (41) der Schloßschraube (38) eine Mutter (43) aufgeschraubt ist.

4. Gepäckträger nach Anspruch 1, dadurch gekennzeichnet, daß das obere Ende (46) des Stützschenkels (16,17) etwa L-förmig abgewinkelt ist und in der Nut (29) zwischen dem Nutengrund (31) der Nut (29) sowie dem Nutenstein (52) liegt.

5. Gepäckträger nach Anspruch 4, dadurch gekennzeichnet, daß der Nutenstein (52) eine Gewindebohrung (53) für eine Klemmschraube (54) enthält, durch die beim Anziehen der Nutenstein (52) gegen den Stützschenkel (16, 17) und die hinterschnittenen Nutenflanken (32, 33) verspannbar ist.

6. Gepäckträger nach Anspruch 4, dadurch gekennzeichnet, daß die hinterschnittenen Nutenflanken (32, 33) in Längsrichtung der Nut (29) verlaufende Klemmflächen (47, 48) aufweisen, deren näher zur Mitte der Nut (29) hin gelegene Abschnitte in Richtung auf den Nutengrund (31) vorspringen, und daß der Nutenstein (52) damit zusammenwirkende Komplementärflächen (49, 51) enthält, die beim Anziehen der Klemmschraube (54) ein Aufweiten der hinterschnittenen Nutenflanken (32, 33) verhindern.

7. Gepäckträger nach Anspruch 4, dadurch gekennzeichnet, daß die Nut (29) im Bereich ihres Nutengrundes (31) an das Querschnittsprofil des L-förmig abgewinkelten Abschnittes (46) des oberen Endes des Stützschenkels (16, 17) angepaßt ist.

8. Gepäckträger nach Anspruch 1, dadurch gekennzeichnet, daß der Nutenstein (71) einen einstückig angeformten Gewindeschaft (69) trägt, der in eine in Längsrichtung des Stützschenkels (16, 17) verlaufende Bohrung (67) sitzt und daß auf dem Gewindeschaft (69) zwischen dem oberen Ende des Stützschenkels (16, 17) und dem Nutenstein (71) eine Gewindemutter (72) aufgeschraubt ist, die gegen Randflächen der Nut (29) unter Anspannung des Nutensteines (71) in der Nut (29) festschraubbar ist.

9. Gepäckträger nach Anspruch 8, dadurch gekennzeichnet, daß die Bohrung (67) in einer Hülse (66) enthalten ist, die auf dem oberen freien Ende des Stützschenkels (16, 17) starr befestigt ist.

10. Gepäckträger nach Anspruch 1 oder 2, dadurch gekennzeichnet, daß jeder Stützschenkel (16, 17) zumindest im Bereich seines oberen Endes einen kreisförmigen Querschnitt aufweist.

11. Gepäckträger nach Anspruch 1 oder 2, dadurch gekennzeichnet, daß die beiden Stützschenkel (16, 17) jedes Satzes durch eine Querstrebe (20) miteinander verbunden sind, die im Abstand zu der betreffenden Längsseite (12, 13) seines Rahmens (4) verläuft.

12. Gepäckträger nach Anspruch 11, dadurch gekennzeichnet, daß auf jeder Seite die querverlaufende Strebe (20) über einen der Stützschenkel (17) hinaussteht und an ihrem überstehenden Ende (22) in Richtung auf die untere Befestigungsstelle (18) der Stützschenkel (16, 17) zu abgebogen ist.

13. Gepäckträger nach Anspruch 1 oder 2, dadurch gekennzeichnet, daß die unteren Enden jedes Satzes von Stützschenkeln (16, 17) höhenverstellbar in einem Klemmstück (18) sitzen.

## Claims

1. Luggage carrier (9) for bicycles, having a frame (11) forming a luggage support surface, the longitudinal side elements (12, 13) of which run approximately parallel to a longitudinal axis of the bicycle and from which a set of at least two support legs (16, 17) extends downwards converging to define a V-configuration, whereby the free lower ends of said support legs are to be secured to the bicycle adjacent to the ends (6) of a fork of the bicycle; and having clamping means (37, 52, 71) to secure the upper end of each of said support legs to the respective longitudinal side element (12, 13) of said frame (11) of the luggage carrier (9) at any desired point along a section, which for at least a portion extends parallel to or along the respective longitudinal side element (12, 13), characterised in that, at least in those sections in which said support legs (16, 17) are adjustable, its frame (11) is provided with grooves (29) extending in the longitudinal direction of said longitudinal side element (12, 13) with undercut groove flanks (32, 33); and that the clamping element is formed by a slide block (37, 52, 71) which cooperates with the undercut groove flanks (32, 33).

2. Luggage carrier (9) for bicycles, having a frame (11) forming a luggage support surface, the longitudinal side elements (12, 13) of which, formed by struts, run approximately parallel to a longitudinal axis of the bicycle and from which a set of at least two support legs (16, 17) extends downwards converging to define a V-configuration, whereby the free lower ends of said support legs are to be secured to the bicycle adjacent to the ends (6) of a fork of the bicycle; and having clamping means (56) in the form of sleeves, which with a slot (61) rest on the corresponding strut (12, 13) in a form-locking manner, and by means of which the upper end of each of said support legs (16, 17) may be secured to the respective longitudinal side element (12, 13) of said frame (11) of the luggage carrier (9) at any desired point along a section, which for at least a portion extends parallel to or along the respective longitudinal side element (12, 13), characterised in that the sleeve contains a bag-shaped opening (62) adapted to the cross-section of the respective support leg (16, 17); and that the sleeve comprises two half shells (57, 58), the dividing face (64) of which contains the axis of said openings (61, 62) which are to be clamped together by at least one set screw (59).

3. Luggage carrier according to Claim 1, characterised in that the slide block is formed by a head (37) of a clamping screw (38), of which the threaded shaft (41) projects from the groove (29) and passes through a transverse hole (42) contained in the support leg (16, 17); and that a nut (43) is screwed onto the free end of said threaded shaft (41) of said clamping screw (38).

4. Luggage carrier according to Claim 1, characterised in that the upper end (46) of the support leg (16, 17) is angled approximately in the shape of an L and lies in the groove (29) between the groove base (31) of said groove (29) and the slide block (52).

5. Luggage carrier according to Claim 4, characterised in that the slide block (52) has a tapped bore (53) for a set screw (54) for clamping when the slide block (52) is tightened against the support leg (16, 17) and the undercut groove flanks (32, 33).

6. Luggage carrier according to Claim 4, characterised in that the undercut groove flanks (32, 33) have clamping surfaces (47, 48) extending in the longitudinal direction of the groove (29), whereby those sections lying closer to the centre of said groove (29) project towards the groove base (31); and that the slide block (52) has complementary surfaces (49, 51) cooperating therewith to prevent the undercut groove flanks (32, 33) from expanding when the set screw (54) is tightened.

7. Luggage carrier according to Claim 4, characterised in that the groove base (31) of the groove (29) is matched to the cross-sectional profile of the L-shaped angled section (46) of the upper end of the support leg (16, 17).

8. Luggage carrier according to Claim 1, characterised in that the slide block (71) has an integral threaded shaft (69) formed onto it, which sits in a hole (67) running in longitudinal direction of the support leg (16, 17), and that a threaded nut (72) is screwed onto said threaded shaft (69) between the upper end of the support leg (16, 17) and the slide block (71), said nut (72) may be tightened against edge surfaces of the groove (29) by tensioning the slide block (71) in said groove (29).

9. Luggage carrier according to Claim 8, characterised in that the hole (67) is contained in a sleeve (66), which is rigidly secured on the free upper end of the support leg (16, 17).

10. Luggage carrier according to Claim 1 or 2, characterised in that each support leg (16, 17) has a circular cross-section at least in the area of its upper end.

11. Luggage carrier according to Claim 1 or 2, characterised in that the two support legs (16, 17) of each set are interconnected by a transverse brace (20) extending at a distance from the respective longitudinal side element (12, 13) of its frame (4).

12. Luggage carrier according to Claim 11, characterised in that the transverse brace (20) projects beyond one of the support legs (17) at each side and is bent at its protruding end (22) in the direction of the lower clamping point (18) of the support legs (16, 17).

13. Luggage carrier according to Claim 1 or 2, characterized in that the lower end of each set of support legs (16, 17) sits in a clamping element (18) to permit height adjustment.

## Revendications

1. Porte-bagages (9) pour véhicules à deux roues, comportant un cadre (11) qui forme une surface de pose pour les bagages, dont les grands côtés (12, 13) sont sensiblement parallèles à un axe longitudinal du véhicule et à partir duquel, de chaque côté, un jeu d'au moins deux jambes d'appui (16, 17) s'étend vers le bas en convergeant en V, jambes d'appui dont les extrémités libres inférieures sont destinées à être fixées sur le véhicule à deux roues, dans la région des extrémités (6) d'une fourche dudit véhicule à deux roues, comportant des éléments de fixation (37, 52, 71) au moyen desquels l'extrémité supérieure de chacune des jambes d'appui peut être fixée sur le grand côté (12, 13) concerné du cadre (11) du porte-bagages (9) en un endroit quelconque à l'intérieur d'un segment qui, sur une certaine longueur au moins, s'étend parallèlement au ou le long du grand côté (12, 13) concerné, caractérisé par le fait que le cadre (11) du porte-bagages, au moins dans les parties dans lesquels les jambes d'appui (16, 17) sont réglables, présente des rainures (29) avec des flancs en contre-dépouille (32, 33) qui s'étendent dans la direction longitudinale du grand côté (12, 13) et par le fait que l'élément de fixation est constitué par un coulisseau (37, 52, 71) qui coopère avec les flancs en contredépouille (32, 33) de la rainure.

2. Porte-bagages (9) pour véhicules à deux roues, comportant un cadre (11) qui forme une surface de pose pour les bagages, dont les grands côtés (12, 13) formés de barres s'étendent sensiblement parallèlement à un axe longitudinal du véhicule et à partir duquel, de chaque côté, un jeu d'au moins deux jambes d'appui (16, 17) s'étend vers le bas en convergeant en V, jambes d'appui dont les extrémités libres inférieures sont destinées à être fixées sur le véhicule à deux roues, dans la région des extrémités (6) d'une fourche dudit véhicule à deux roues, comportant des éléments de fixation (56) en forme de manchons qui, par un trou débouchant, sont montés par conjugaison de forme sur la barre (12, 13) concernée et au moyen desquels l'extrémité supérieure de chacune des jambes d'appui (16, 17) peut être fixée sur le grand côté (12, 13) concerné du cadre (11) du porte-bagages (9) en un endroit quelconque à l'intérieur d'un segment qui s'étend sur une certaine longueur au moins du grand côté (12, 13) concerné, caractérisé par le fait que le manchon comporte une ouverture (62) aveugle adaptée à la section de la jambe d'appui (16, 17) concernée et par le fait que la manchon est constitué de deux coquilles (57, 58) dont le plan de joint (64) contient l'axe géométrique des ouvertures (61, 62) et qui sont assemblées par au moins une vis de serrage (59).

3. Porte-bagages selon la revendication 1, caractérisé par le fait que le coulisseau est formé par une tête (37) d'une vis à collet carré (38) dont la tige (41), qui porte un filetage, fait saillie hors de la rainure (29) et pénètre dans un perçage transversal (42) prévu dans la jambe d'appui (16, 17) et par le fait qu'un écrou (43) est vissé sur l'extrémité libre de la tige filetée (41) de la vis à collet carré (38).

4. Porte-bagages selon la revendication 1, caractérisé par le fait que l'extrémité (46) supérieure de la jambe d'appui (16, 17) est coudée sensiblement en L et est située dans la rainure (29) entre le fond (31) de la rainure (29) et le coulisseau (52).

5. Porte-bagages selon la revendication 4, caractérisé par le fait que le coulisseau (52) comporte un taraudage (53) destiné à une vis de blocage (54) au moyen de laquelle le coulisseau (52) peut être appliqué par serrage contre la jambe d'appui (16, 17) et les flancs en contre-dépouille (32, 33) de la rainure.

6. Porte-bagages selon la revendication 4, caractérisé par le fait que les flancs en contre-dépouille (32, 33) de la rainure présentent des surfaces de serrage (47, 48) qui s'étendent dans la direction longitudinale de la rainure (29), dont les parties les plus proches du milieu de la rainure (29) forment saillie en direction du fond (31) de la rainure et par le fait que le coulisseau (52) comporte des surfaces complémentaires (49, 51) qui coopèrent avec lesdites parties en saillie et empêchent les flancs en contre-dépouille (32, 33) de la rainure de s'écarter lors du serrage de la vis de blocage (54).

7. Porte-bagages selon la revendication 4, caractérisé par le fait que la rainure (29), dans la région de son fond (31), est adaptée au profil de la section de la partie (46) coudée en L de l'extrémité supérieure de la jambe d'appui (16, 17).

8. Porte-bagages selon la revendication 1, caractérisé par le fait que le coulisseau (71) porte une tige filetée (69) formée d'une pièce avec celui-ci qui est montée dans un perçage (67) qui s'étend dans la direction longitudinale de la jambe d'appui (16, 17) et par le fait qu'un écrou (72) est vissé sur la tige filetée (69), entre l'extrémité supérieure de la jambe d'appui (16, 17) et le coulisseau (71), lequel écrou peut être serré contre des surfaces du bord de la rainure (29) en bloquant le coulisseau (71) dans la rainure (29).

9. Porte-bagages selon la revendication 8, caractérisé par le fait que le perçage (67) est contenu dans un manchon (66) qui est fixé rigidement sur l'extrémité libre supérieure de la jambe d'appui (16, 17).

10. Porte-bagages selon la revendication 1 ou 2, caractérisé par le fait que chaque jambe d'appui (16, 17) présente, au moins dans la région de son extrémité supérieure, une section circulaire.

11. Porte-bagages selon la revendication 1 ou 2, caractérisé par le fait que les deux jambes d'appui (16, 17) de chaque jeu sont reliées entre elles par une barre transversale (20) qui est disposée à distance du grand côté concerné (12, 13).

12. Porte-bagages selon la revendication 11, caractérisé par le fait que, de chaque côté, la barre transversale (20) s'étend au-delà de l'une des jambes d'appui et, à son extrémité (22) dépassant, est pliée en direction du point de fixation (18) de la jambe d'appui (16, 17).

13. Porte-bagages selon la revendication 1 ou 2, caractérisé par le fait que les extrémités inférieures de chaque jeu de jambes d'appui (16, 17) peuvent être réglées en hauteur à l'intérieur d'une pièce de serrage (18).
